# EUROPEAN PATENT APPLICATION

(11) **EP 4 489 454 A1**
(43) Date of publication of application: **08.01.2025**
(21) Application number: 23762879.7
(22) Date of filing: 28.02.2023
(51) Int. Cl.: H04W 8/14

(54) **DATA TRANSMISSION METHOD AND APPARATUS, AND TERMINAL, DEVICE AND STORAGE MEDIUM**

(30) Priority: 04.03.2022 CN 202210210119
(71) Applicant: VIVO MOBILE COMMUNICATION CO., LTD., Dongguan, Guangdong 523863 (CN)
(72) Inventor: BOUBACAR, Kimba Dit Adamou, Dongguan, Guangdong 523863 (CN)
(74) Representative: Petraz, Gilberto Luigi
(86) International application number: PCT/CN2023/078810
(87) International publication number: WO 2023/165480

(57) **Abstract**

This application discloses a data transmission method and apparatus, a terminal, a device, and a storage medium, and pertains to the field of communication technologies. The data transmission method in embodiments of this application includes: obtaining, by a terminal, a data plane identity DPID corresponding to the terminal, the DPID being used to identify the terminal on a data plane; establishing, by the terminal, a connection to the data plane using the DPID; and sending, by the terminal, data to the data plane using the DPID.

## Description

### CROSS-REFERENCE TO RELATED APPLICATION

This application claims priority to Chinese Patent Application No. 202210210119.6, filed on March 04, 2022 and entitled "DATA TRANSMISSION METHOD AND APPARATUS, TERMINAL, DEVICE, AND STORAGE MEDIUM," which is incorporated herein by reference in its entirety.

### TECHNICAL FIELD

This application pertains to the field of communication technologies, and specifically relates to a data transmission method and apparatus, a terminal, a device, and a storage medium.

### BACKGROUND

In related art, the implementation of control of wireless transmission of various types of service data or terminal communication behavior between a user terminal and the network mainly relies on control plane (control plane, CP) and user plane (user plane, UP) protocols.

In a communication system, a wireless network data plane (Data Plane, DP) protocol can be introduced. However, how a data plane performs data transmission with a terminal remains undefined.

### SUMMARY

Embodiments of this application provide a data transmission method and apparatus, a terminal, a device, and a storage medium, so as to solve the problem of not knowing how a data plane performs data transmission with a terminal.

According to a first aspect, a data transmission method is provided. The method includes:
obtaining, by a terminal, a data plane identity DPID corresponding to the terminal, the DPID being used to identify the terminal on a data plane;
establishing, by the terminal, a connection to the data plane using the DPID; and
sending, by the terminal, data to the data plane using the DPID.

According to a second aspect, a data transmission method is provided. The method includes:
determining, by a network-side device, a data plane identity DPID corresponding to a terminal, the DPID being used to identify the terminal on a data plane; and
sending, by the network-side device, the DPID to the terminal.

According to a third aspect, a data transmission method is provided. The method includes:
obtaining, by a second base station, a data plane identity DPID corresponding to a terminal, the DPID being used to identify the terminal on a data plane.

According to a fourth aspect, a data transmission method is provided. The method includes:
obtaining, by a data plane, a data plane identity DPID corresponding to a terminal, the DPID being used to identify the terminal on a data plane;
establishing, by the data plane, a connection to the terminal based on the data plane identity DPID; and
receiving, by the data plane, data sent by the terminal.

According to a fifth aspect, a terminal is provided, where the terminal includes a processor and a memory. The memory has stored thereon a program or instruction executable on the processor. When the program or instruction is executed by the processor, the steps of the method according to the first aspect are implemented.

According to a sixth aspect, a terminal is provided, including a processor and a communication interface, where the processor is configured to:
obtain a data plane identity DPID corresponding to the terminal, the DPID being used to identify the terminal on a data plane; and
establish a connection to the data plane using the DPID; and
the communication interface is configured to:
   send data to the data plane using the DPID.

According to a seventh aspect, a network-side device is provided. The network-side device includes a processor and a memory. The memory has stored thereon a program or instruction executable on the processor. When the program or instruction is executed by the processor, the steps of the method according to the second aspect are implemented.

According to an eighth aspect, a network-side device is provided, including a processor and a communication interface, where the processor is configured to:
determine a data plane identity DPID corresponding to a terminal, the DPID being used to identify the terminal on a data plane; and
the communication interface is configured to:
   send the DCI to the terminal.

According to a ninth aspect, a second base station is provided, where the second base station includes a processor and a memory. The memory has stored thereon a program or instruction executable on the processor. When the program or instruction is executed by the processor, the step of the method according to the third aspect is implemented.

According to a tenth aspect, a second base station is provided, including a processor and a communication interface, where the processor is configured to:
obtain a data plane identity DPID corresponding to a terminal, the DPID being used to identify the terminal on a data plane.

According to an eleventh aspect, a data plane is provided, where the data plane includes a processor and a memory. The memory has stored thereon a program or instruction executable on the processor. When the program or instruction is executed by the processor, the steps of the method according to the fourth aspect are implemented.

According to a twelfth aspect, a data plane is provided, including a processor and a communication interface, where the processor is configured to:
obtain a data plane identity DPID corresponding to a terminal, the DPID being used to identify the terminal on a data plane; and
establish a connection to the terminal based on the data plane identity DPID; and
the communication interface is configured to:
   receive data sent by the terminal.

According to a thirteenth aspect, a data transmission system is provided, including a terminal, a network-side device, a second base station, and a data plane. The terminal may be configured to execute the steps of the data transmission method according to the first aspect. The network-side device may be configured to execute the steps of the data transmission method according to the second aspect. The second base station may be configured to execute the step of the data transmission method according to the third aspect. The data plane may be configured to execute the steps of the data transmission method according to the fourth aspect.

According to a fourteenth aspect, a readable storage medium is provided. The readable storage medium has stored thereon a program or instruction, and when the program or instruction is executed by a processor, the steps of the method according to the first aspect are implemented, the steps of the method according to the second aspect are implemented, the step of the method according to the third aspect is implemented, or the steps of the method according to the fourth aspect are implemented.

According to a fifteenth aspect, a chip is provided. The chip includes a processor and a communication interface. The communication interface is coupled to the processor, and the processor is configured to run a program or instruction to implement the method according to the first aspect, the method according to the second aspect, the method according to the third aspect, or the method according to the fourth aspect.

According to a sixteenth aspect, a computer program/program product is provided, where the computer program/program product is stored in a storage medium, the program/program product is executed by at least one processor to implement the steps of the method according to the first aspect, the steps of the method according to the second aspect, the step of the method according to the third aspect, or the steps of the method according to the fourth aspect.

In the embodiments of this application, the data plane identity DPID is introduced for local identification of the terminal on the data plane, and the terminal establishes a connection to the data plane and transmits data using the DPID, so that a transmission link between the UE and DP is effectively established for data communication, and the identity of the UE is ensured not to be leaked, thereby ensuring the security and reliability of data transmission.

### BRIEF DESCRIPTION OF DRAWINGS

FIG. 1 is a block diagram of a wireless communication system to which embodiments of this application are applicable;
FIG. 2 is a schematic diagram of a user plane protocol stack architecture provided in related art;
FIG. 3 is a schematic diagram of a control plane protocol stack architecture provided in related art;
FIG. 4 is a schematic diagram of a data plane protocol architecture cut off in a wireless access network provided in related art;
FIG. 5 is a schematic diagram of a data plane protocol architecture of UE, a wireless access network, and a core network provided in related art;
FIG. 6 is a first schematic flowchart of a data transmission method according to an embodiment of this application;
FIG. 7 is a schematic diagram of a network-side device mapping a UE ID to a DPID according to an embodiment of this application;
FIG. 8 is a schematic diagram of a terminal performing a data collection process according to an embodiment of this application;
FIG. 9 is a schematic diagram of a connectionless UE establishing a transmission channel with a data plane according to an embodiment of this application;
FIG. 10 is a schematic diagram of mapping a UE ID to a DPID according to an embodiment of this application;
FIG. 11 is a second schematic flowchart of a data transmission method according to an embodiment of this application;
FIG. 12 is a third schematic flowchart of a data transmission method according to an embodiment of this application;
FIG. 13 is a fourth schematic flowchart of a data transmission method according to an embodiment of this application;
FIG. 14 is a first schematic structural diagram of a data transmission apparatus according to an embodiment of this application;
FIG. 15 is a second schematic structural diagram of a data transmission apparatus according to an embodiment of this application;
FIG. 16 is a third schematic structural diagram of a data transmission apparatus according to an embodiment of this application;
FIG. 17 is a fourth schematic structural diagram of a data transmission apparatus according to an embodiment of this application;
FIG. 18 is a schematic structural diagram of a communication device according to an embodiment of this application;
FIG. 19 is a schematic diagram of a hardware structure of a terminal implementing an embodiment of this application;
FIG. 20 is a first schematic diagram of a hardware structure of a network-side device implementing an embodiment of this application;
FIG. 21 is a second schematic diagram of a hardware structure of a network-side device implementing an embodiment of this application;
FIG. 22 is a schematic diagram of a hardware structure of a second base station implementing an embodiment of this application; and
FIG. 23 is a schematic diagram of a hardware structure of a data plane implementing an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

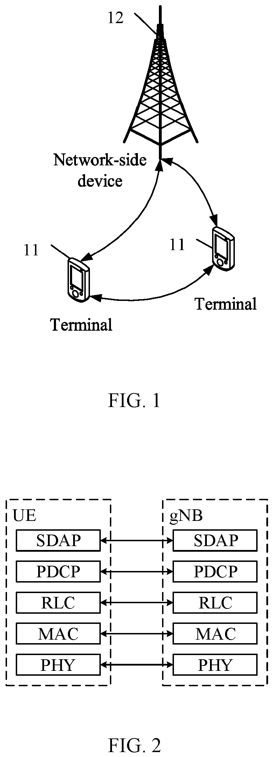

FIG. 1 is a block diagram of a wireless communication system to which embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), or pedestrian user equipment (PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in the embodiments of this application. The network-side device 12 can include an access network device or core network device, where the access network device can also be referred to as a radio access network device, radio access network (Radio Access Network, RAN), radio access network function, or radio access network unit. The access network device can include base stations, WLAN access points, Wi-Fi nodes, or the like. The base station can be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited. The core network device can include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF or L-NEF), binding support function (Binding Support Function, BSF), application function (Application Function, AF), and the like. It should be noted that in the embodiments of this application, only the core network device in the NR system is introduced as an example, and the specific type of the core network device is not limited.

The following describes in detail a data transmission method and apparatus, a terminal, a device, and a storage medium provided in the embodiments of this application by using some embodiments and application scenarios thereof with reference to the accompanying drawings.

Firstly, the following content is introduced.

Control plane and user plane protocols and related functions.

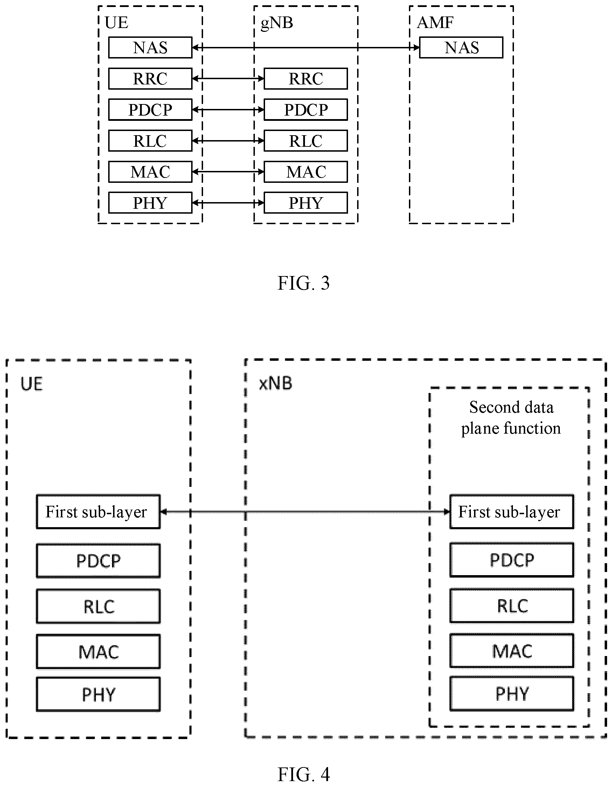

FIG. 2 is a schematic diagram of a user plane protocol stack architecture provided in related art. FIG. 3 is a schematic diagram of a control plane protocol stack architecture provided in related art. As shown in FIG. 2 and FIG. 3, in the control plane (control plane, CP) and user plane (user plane, UP) protocol architectures, the user plane consists of the service data adaptation protocol (Service Data Adaptation Protocol, SDAP), packet data convergence protocol (Packet Data Convergence Protocol, PDCP), radio link control (Radio Link Control, RLC), medium access control (Medium Access Control, MAC), and physical layer (Physical Layer, PHY), for wireless transmission of various types of service data (such as video, voice, and files) between the user terminal (UE) and the network. The control plane consists of the non-access stratum (Non-access stratum, NAS), radio resource control (Radio Resource Control, RRC), packet data convergence protocol (Packet Data Convergence Protocol, PDCP), radio link control (Radio Link Control, RLC), MAC, and PHY, for transmission of control signaling (such as NAS signaling and RRC signaling) between the network and the UE. The network issues related configuration information for the UE through control signaling to control communication behaviors between the UE and the network, thereby ensuring that the service data transmission meets the service requirement.

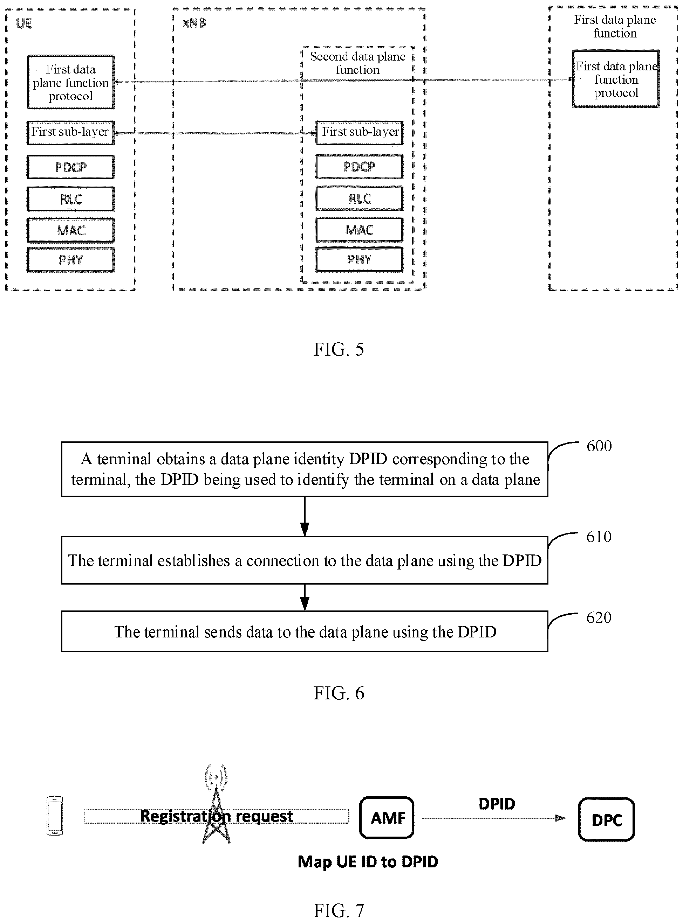

FIG. 4 is a schematic diagram of a data plane protocol architecture cut off in the wireless access network provided in the related art. FIG. 5 is a schematic diagram of a data plane protocol architecture of UE, a wireless access network, and a core network provided in the related art. As shown in FIG. 4 and FIG. 5, a technical solution for a future wireless network data plane (Data Plane, DP) protocol is shown. The first sub-layer refers to a data plane protocol layer cut off at the UE and wireless access network (x-Node-B), for end-to-end data plane transmission between the UE and the wireless access network. A first data plane function protocol is a data plane protocol layer cut off between the UE and the core network. In the figure, the "first data plane function (Data Plane Function, DPF)" is a functional entity in the core network supporting data plane functions, which is used for end-to-end data plane transmission between the UE and the core network, and/or provides configuration parameters and implements corresponding control functions for a data plane communication function between the UE and the network.

FIG. 6 is a first schematic flowchart of a data transmission method according to an embodiment of this application. As shown in FIG. 6, the method includes the following steps.

Step 600: A terminal obtains a data plane identity (Data Plane Identity, DPID) corresponding to the terminal, the DPID being used to identify the terminal on a data plane.

Step 610: The terminal establishes a connection to the data plane using the DPID.

Step 620: The terminal sends data to the data plane using the DPID.

Optionally, if the terminal needs to send data to the data plane, that is, the data plane needs to obtain data of the terminal, the data plane needs to be able to identify the terminal and can establish a reliable data transmission link with the terminal. In this embodiment of this application, a data plane identity DPID is introduced for local identification of a terminal on the data plane, so that the terminal can be effectively identified without leaking the identity of the UE.

Optionally, the terminal may first obtain its own data plane identity DPID. When the terminal and the data plane are connected and communicated, the data plane can identify the terminal based on the data plane identity DPID, which can effectively prevent the data plane from learning the real identification or real identity of the terminal. A transmission link between the UE and DP can be effectively established for data communication, and the identity of the UE can be ensured not to be leaked, thereby ensuring the security and reliability of data transmission.

Optionally, the DPID corresponding to the terminal may correspond to the identity-related information of the terminal. For example, the DPID corresponding to a terminal may correspond to a cell radio network temporary identifier (Cell Radio Network Temporary Identifier, C-RNTI) of the terminal.

Optionally, the DPID corresponding to the terminal may correspond to the identity-related information of the terminal. For example, the DPID corresponding to a terminal may correspond to a 5G temporary mobile subscriber identity (5G Temporary MobileSubscriber Identity, 5G-TMSI) of the terminal.

Optionally, the DPID corresponding to the terminal may correspond to the identity-related information of the terminal. For example, the DPID corresponding to a terminal may correspond to a 5G shorted temporary mobile subscriber identity (5G Shorted Temporary MobileSubscriber Identity, 5G-S-TMSI) of the terminal.

Optionally, for a dual-SIM or multi-SIM terminal, each card may correspond to a unique identity, such as a 5G-TMSI, where different 5G-TMSIs can correspond to different DPIDs, respectively.

Optionally, a dual-SIM or multi-SIM terminal may correspond to multiple different DPIDs. For example, a dual-SIM terminal may correspond to 2 different DPIDs, where each DPID corresponds to one SIM of the terminal, respectively.

In this embodiment of this application, the use of the data plane identity DPID to identify the terminal can ensure the identity of the UE not to be leaked on the basis of effectively establishing a transmission link between the UE and DP for data communication.

Optionally, in the embodiments of this application, the DPID corresponding to the terminal may alternatively be referred to the DPID of the terminal.

Optionally, the data plane may be a data plane entity.

Optionally, in the embodiments of this application, the data plane may be an independent network element or be co-located with another network entity or arranged around another network entity. For example, the data plane may be co-located with an access and mobility management function (Access and Mobility Management Function, AMF) or provided as an independent network element beside the AMF.

In this embodiment of this application, the data plane identity DPID is introduced for local identification of the terminal on the data plane, and the terminal establishes a connection to the data plane and transmits data using the DPID, so that a transmission link between the UE and DP is effectively established for data communication, and the identity of the UE is ensured not to be leaked, thereby ensuring the security and reliability of data transmission.

Optionally, the obtaining, by the terminal, a data plane identity DPID corresponding to the terminal includes:
receiving, by the terminal, the DPID sent by a network-side device.

Optionally, a data plane identity DPID may be configured and then sent to the terminal by the network-side device.

Optionally, when obtaining a DPID, the terminal may receive a DPID sent by the network-side device.

Optionally, FIG. 7 is a schematic diagram of a network-side device mapping a UE ID to a DPID according to an embodiment of this application. As shown in FIG. 7, since a data plane identity DPID corresponds to identity-related information of a terminal, the network-side device can determine a mapping relationship between the data plane identity DPID and the identity-related information of the terminal when configuring the DPID for the terminal.

Optionally, when sending a DPID to a terminal, the network-side device may send a mapping relationship to the terminal. In this scenario, the network-side device may send a mapping relationship between identity-related information of a terminal and a DPID to the terminal individually, or send the mapping relationship between identity-related information of one or more terminals and DPIDs to the one or more terminals simultaneously.

Optionally, when sending a DPID to a terminal, the network-side device may send to the terminal a DPID corresponding to the terminal. In this scenario, the network-side device may send the DPID corresponding to the terminal to the terminal individually.

Optionally, the network-side device may be the network-side device 12 shown in FIG. 1.

Optionally, the network-side device may be a core network device, such as an access and mobility management function AMF.

Optionally, the network-side device may be an access network device, such as a base station gNB.

Optionally, the network-side device may determine the DPID corresponding to the terminal based on the identity-related information of the terminal.

Optionally, the network-side device may input the identity-related information of the terminal into a first function to obtain a DPID as output, where the first function can output different DPIDs based on different identity-related information.

Optionally, the first function may be a mathematical operation function.

For example, the identity-related information of the terminal may be added with, subtracted by, or multiplied by a fixed value to obtain a DPID corresponding to the terminal.

For example, two types of information in the identity-related information of the terminal can be added, subtracted, or multiplied to obtain a DPID corresponding to the terminal.

For example, two types of information in the identity-related information of the terminal can be added together and then added with a fixed value, or subtracted and then multiplied by a fixed value, or multiplied and then subtracted by a fixed value to obtain a DPID corresponding to the terminal.

It should be noted that the first function can be any function that outputs different DPIDs based on different identity-related information. This is not limited in this embodiment of this application.

For example, a DPID corresponding to a terminal can be defined as: DPID = locally administered IEEE MAC address = map (5G-TMSI or 5G-S-TMSI, C-RNTI or ServCellIndex) = map (48 bit, 16bit or 5bit) = 48bit;
ServCellIndex ::= INTEGER (0..maxNrofServingCells-1) = (0..31) = 5bit. where
map is the mapping function, and 48bit is the length of the DPID. For example, map (5G-S-TMSI, ServCellIndex) = 48bit indicates that a 5G-S-TMSI and a ServCellIndex are mapped into 48 bits.

For example, a DPID corresponding to a terminal can be defined as: PID = locally administered IEEE MAC address = 5G-S-TMSI.

Optionally, the method further includes:
determining, by the terminal, configuration information for data collection; and
obtaining, by the terminal, the data based on the configuration information for the data collection; where the configuration information for the data collection includes one or more of the following:
   first indication information used to indicate a region for the data collection;
   second indication information used to indicate a type for the data collection;
   third indication information used to indicate a collection period for the data collection; and
   fourth indication information used to indicate a reporting period for the data.

Optionally, unlike the CP and UP in a wireless network in the related art, the main function of a DP protocol is to support the UE in collection and measurement of specific data specified/configured by the network and transmit corresponding data or measurement results to the network, enabling the network to use these data and/or measurement results for statistics, analysis, and decision-making, thereby assisting the network in formulating transmission strategies, optimizing communication performance indicators, and enhancing user experience of data transmission.

Therefore, to implement data collection control and transmission for end-to-end network functions, in this embodiment of this application, the UE performs data collection and measurement on specific data specified and configured by the network based on a DP protocol, and transmits the measured data (such as measurement results) to the network after a connection to the data plane is established.

Optionally, the data sent by the terminal to the data plane using the DPID can be the measurement data obtained after the terminal performs the measurement.

Optionally, to implement data collection control for end-to-end network functions (CN, RAN, UE) and support on-demand provision of data collection and transmission with different service qualities, information such as the need for data collection may be indicated to the terminal using configuration information for data collection.

Optionally, the network-side device or data plane may send the configuration information for the data collection to the terminal. In other words, when the terminal determines configuration information for the data collection, the determination may be made after the configuration information for the data collection sent by the network-side device or data plane is received.

Optionally, when the terminal determines the configuration information for the data collection, the determination may be made based on protocol pre-definition.

Optionally, when the terminal determines the configuration information for the data collection, the determination may be made based on system pre-configuration.

Optionally, when the terminal determines the configuration information for the data collection, the determination may be made based on an upper-layer indication.

Optionally, the terminal may receive the configuration information for the data collection sent by the network-side device or data plane, learn information such as the need for data collection based on the configuration information for the data collection, and perform the data collection based on the configuration information for the data collection to obtain data.

Optionally, the network-side device may send the configuration information for the data collection along with the DPID that is being sent to the terminal.

Optionally, the network-side device may have already sent the configuration information for the data collection to the terminal before sending the DPID to the terminal.

Optionally, the network-side device may send the configuration information for the data collection to the terminal after sending the DPID to the terminal.

Optionally, the data plane may send the configuration information for the data collection to the terminal after the terminal has obtained the DPID and established a connection to the data plane.

Optionally, after obtaining the DPID, the terminal may perform data collection to obtain the data if the terminal further obtains the configuration information for the data collection, or has obtained the configuration information for the data collection, or has learned the configuration information for the data collection. In this scenario, whether the terminal has established a connection to the data plane does not affect data collection. For example, the data collection may be completed before or after a connection to the data plane is established, and the data may be sent to the data plane after the connection to the data plane is established, the data collection is completed, and data is obtained.

Optionally, after obtaining the DPID, if the terminal needs to obtain the configuration information for the data collection from the data plane, the terminal may obtain the configuration information for the data collection from the data plane after a connection to the data plane is established, and after completing the data collection based on the configuration information for the data collection and obtaining the data, the terminal sends the data to the data plane.

Optionally, after establishing a connection to the terminal and obtaining the DPID corresponding to the terminal, the data plane may send the configuration information for the data collection and the DPID corresponding to the terminal expected to perform data collection to the network-side device. After receiving the information from the data plane, the network-side device may send the configuration information for the data collection to the terminal corresponding to the DPID. After receiving the configuration information for the data collection, the terminal may perform the data collection and then send collected results to the network side using its DPID, and the network-side device forwards the results to the data plane.

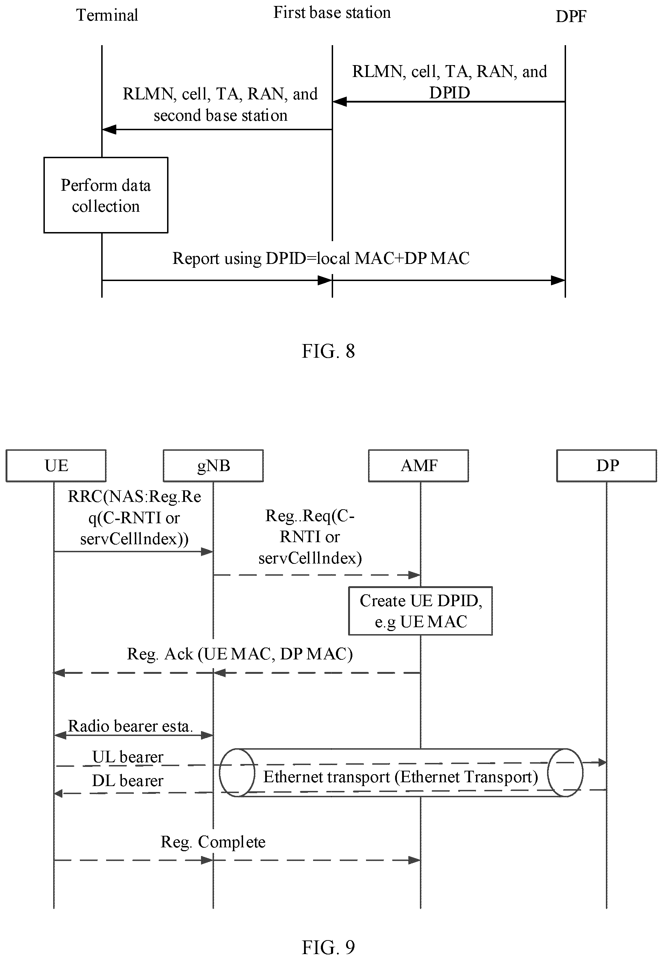

For example, FIG. 8 is a schematic diagram of a terminal performing a data collection process according to an embodiment of this application. As shown in FIG. 8, after establishing a connection to the terminal and obtaining a DPID corresponding to the terminal, a data plane may send configuration information for data collection to a network-side device, such as the public land mobile network (Public Land Mobile Network, PLMN), cell, timing advance (Timing Advance, TA), and RAN-based notification area (RAN-based Notification Area, RNA), and a DPID corresponding to the terminal expected to perform data collection shown in FIG. 8. For example, after the network-side device receives the information from the data plane, a first base station shown in FIG. 8 may send the configuration information for the data collection (such as PLMN, cell, TA, RNA, and a second base station shown in FIG. 8) to the terminal. After receiving the configuration information for the data collection, the terminal may perform the data collection and then send the collected results to the network-side using the DPID (Report using DPID), and the network-side device forwards the results to the data plane. As shown in FIG. 8, when the DP configures the UE to perform the data collection and reporting, the UE may perform the data collection and report data to the data plane using the DPID.

Optionally, the configuration information for the data collection includes any one or a combination of the following:
first indication information used to indicate a region for the data collection; or
second indication information used to indicate a type for the data collection; or
third indication information used to indicate a collection period for the data collection; or
fourth indication information used to indicate a reporting period for the data.

Optionally, the first indication information used to indicate a region for the data collection may include information of the region for the data collection itself, or may include one piece of information that can indicate the region for the data collection, such as index information or link information. This is not limited in this embodiment of this application.

Optionally, the second indication information used to indicate a type for the data collection may include information of the type for the data collection itself, or may include one piece of information that can indicate the type for the data collection, such as index information or link information. This is not limited in this embodiment of this application.

Optionally, the third indication information used to indicate a collection period for the data collection may include information of the collection period for the data collection itself, or may include one piece of information that can indicate the collection period for the data collection, such as index information or link information. This is not limited in this embodiment of this application.

Optionally, the fourth indication information used to indicate a reporting period for the data may include information of the reporting period for the data itself, or may include one piece of information that can indicate the reporting period for the data, such as index information or link information. This is not limited in this embodiment of this application.

Optionally, in a case that the configuration information for the data collection includes the fourth indication information, the sending, by the terminal, data to the data plane using the DPID includes:
sending, by the terminal, the data to the data plane using the DPID based on the reporting period for the data.

Optionally, in a case that the configuration information for the data collection includes the fourth indication information, that is, after the terminal obtains the reporting period for the data, the terminal may send data to the data plane using the DPID based on the reporting period for the data.

For example, if the reporting period for the data is to report once every other 5 hours, the terminal may use the DPID to send data obtained from the most recent measurement to the data plane every other 5 hours.

For example, if the reporting period for the data is to report once every other 5 hours, the terminal may use the DPID to send data obtained from a real-time measurement at that reporting moment to the data plane every other 5 hours.

Optionally, in a case that the configuration information for the data collection includes the first indication information, the obtaining, by the terminal, the data based on the configuration information for the data collection includes:
performing, by the terminal, the data collection in the region for the data collection to obtain the data.

Optionally, in a case that the configuration information for the data collection includes the first indication information, that is, after the terminal obtains the region for the data collection, the terminal may perform data collection in the region for the data collection and obtain the data.

Optionally, the region for the data collection may include PLMN-related information, cell-related information, TA-related information, RNA-related information, or base station-related information.

Optionally, in a case that the configuration information for the data collection includes the second indication information, the obtaining, by the terminal, the data based on the configuration information for the data collection includes:
performing, by the terminal, the data collection based on the type to obtain the data corresponding to the type.

Optionally, in a case that the configuration information for the data collection includes the second indication information, that is, after the terminal obtains the type for the data collection, the terminal may collect data corresponding to the type.

Optionally, the type for the data collection may include coverage quality-related data or service quality-related data.

Optionally, in a case that the configuration information for the data collection includes the third indication information, the obtaining, by the terminal, the data based on the configuration information for the data collection includes:
performing, by the terminal, the data collection based on the collection period to obtain the data.

Optionally, in a case that the configuration information for the data collection includes the third indication information, that is, after the terminal obtains the collection period for the data collection, the terminal may collect data periodically based on the collection period.

Optionally, the configuration information for the data collection may include multiple items. For example, in a case that the configuration information includes the second indication information and the third indication information, the terminal obtains the collection period for the data collection and the type for the data collection, then the terminal performs the data collection based on the collection period and collects data corresponding to the type.

Optionally, the configuration information for the data collection may include multiple items. For example, in a case that the configuration information includes the first indication information and the third indication information, the terminal obtains the collection period for the data collection and the region for the data collection, then the terminal performs data collection in the region for the data collection based on the collection period.

Optionally, the configuration information for the data collection may include multiple items. For example, in a case that the configuration information includes the first indication information and the second indication information, the terminal obtains the type for the data collection and the region for the data collection, then the terminal performs data collection in the region for the data collection and collects data corresponding to the type.

Optionally, the configuration information for the data collection may include multiple items. For example, in a case that the configuration information includes the first indication information, the second indication information, and the third indication information, the terminal obtains the type for the data collection, the region for the data collection, and the collection period for the data collection, then the terminal performs data collection in the region for the data collection based on the collection period and collects data corresponding to the type.

Optionally, before the obtaining, by a terminal, a data plane identity DPID corresponding to the terminal, in a case that the terminal has completed access, the method further includes:
sending, by the terminal, first information to the network-side device, the first information being used to indicate that the data plane is allowed to obtain data of the terminal.

Optionally, the terminal in this embodiment of this application may be a terminal that is already connected to the network-side device. In this scenario, the network-side device has already learned identity-related information of the terminal and can determine a DPID corresponding to the terminal directly based on the identity-related information of the terminal.

Optionally, when the UE completes a process of the UE accessing the network, the UE can report the first information, indicating that the network-side device or the data plane is allowed to collect data of the UE, that is, to obtain data of the UE. Then the network-side device will send to the UE a DPID corresponding to the UE.

Optionally, before the obtaining, by a terminal, a data plane identity DPID corresponding to the terminal, in a case that the terminal has not completed access, the method further includes:
sending, by the terminal, identity-related information of the terminal to the network-side device, the identity-related information of the terminal being used to determine the DPID; where
different terminals have different DPIDs.

Optionally, for a connectionless (Connectionless) UE, the identity-related information of the terminal is unknown to the network-side device. Then the terminal sends the identity-related information of the terminal to the network-side device, the identity-related information of the terminal being used to determine the DPID. To be specific, after learning the identity-related information of the terminal, the network-side device may determine a DPID corresponding to the terminal based on the identity-related information of the terminal.

For example, taking the network-side device being an AMF as an example, the UE may report a C-RNTI or ServCellIndex to a base station when establishing a connection and registering, and the base station forwards them to the AMF. The AMF may determine a DPID corresponding to the UE and send it to the UE and a data plane (DP) entity.

Optionally, before the establishing, by the terminal, a connection to the data plane using the DPID, the method further includes:
establishing, by the terminal, an RRC connection to the first base station.

Optionally, for a connectionless (Connectionless) UE, before establishing a connection to the data plane using the DPID, the terminal may first initiate an RRC connection to the first base station.

Optionally, the establishing, by the terminal, a connection to the data plane using the DPID includes:
establishing, by the terminal, an Ethernet Ethernet transmission channel with the data plane using the DPID.

Optionally, for a connectionless (Connectionless) UE, after initiating an RRC connection to the first base station, the terminal may establish an Ethernet Ethernet transmission channel to the data plane using the DPID.

FIG. 9 is a schematic diagram of a connectionless UE establishing a transmission channel with a data plane according to an embodiment of this application. As shown in FIG. 9, for the connectionless (Connectionless) UE, a terminal may send identity-related information of the terminal to the network-side device. After learning the identity-related information of the terminal, the network-side device may determine a DPID corresponding to the terminal based on the identity-related information of the terminal. The terminal may alternatively initiate an RRC connection to a first base station. After the UE completes the RRC connection, the UE may establish an Ethernet Ethernet transmission channel to the data plane using the DPID.

Optionally, the DPID includes a first indication bit, the first indication bit being used to indicate that the DPID is used for local management by the data plane to the terminal.

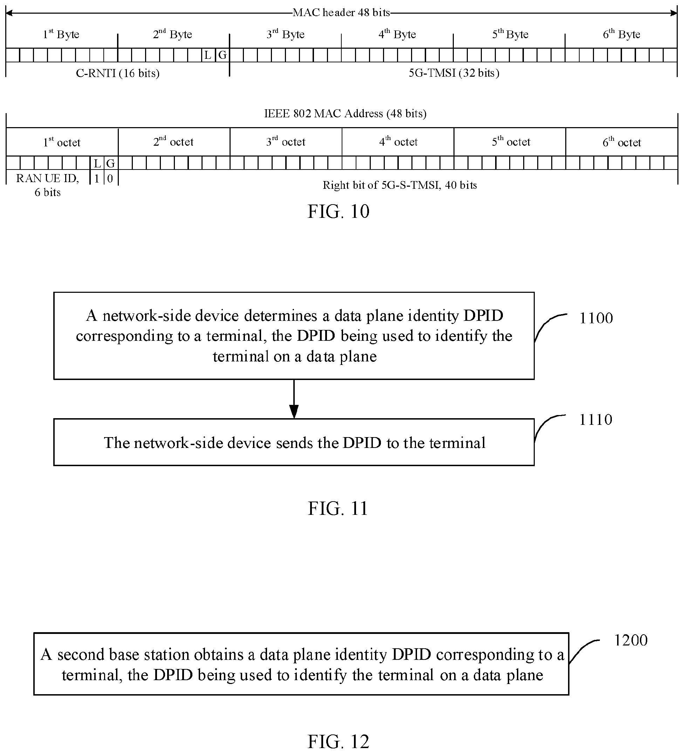

The identity-related information of the terminal being a UE ID is taken as an example, such as a 5G-TMSI, 5G-S-TMSI, C-RNTI, or ServCellIndex. FIG. 10 is a schematic diagram of mapping a UE ID to a DPID according to an embodiment of this application. As shown in FIG. 10, the DPID corresponding to the terminal is defined as: DPID = locally administered IEEE MAC address = map (5G-TMSI or 5G-S-TMSI, C-RNTI or ServCellIndex) = map (48 bit, 16bit or 5bit) = 48bit; ServCellIndex ::= INTEGER (0..maxNrofServingCells-1) = (0..31) = 5bit; or the DPID corresponding to the terminal can be defined as: DPID = locally administered IEEE MAC address = 5G-S-TMSI, where
map is the mapping function, and 48bit is the length of the DPID. For example, map (5G-S-TMSI, ServCellIndex) = 48bit indicates that a 5G-S-TMSI and a ServCellIndex are mapped into 48 bits. The DPID may include a first indication bit, such as L in FIG. 10. When L is 1, it indicates that information (that is, DPID) at which the first indication bit is located is used for local management by the data plane to the terminal. When L is 0, it indicates that the information (that is, DPID) at which the first indication bit is located is not used for local management by the data plane to the terminal, for example, may be a global unique identifier (Global Unique Identifier, GUID).

For example, L in FIG. 10 may be defined as L = (0: global unique, 1: locally administered).

Optionally, the DPID includes a second indication bit, the second indication bit being used to indicate that information carrying the DPID is any of the following: unicast information or multicast information.

Optionally, the DPID may include a second indication bit, the second indication bit being used to indicate that the information carrying the DPID is any of the following: unicast information or multicast information, such as G in FIG. 10. When G is 1, it indicates that the information (that is, DPID) at which the second indication bit is located is unicast information. When G is 0, it indicates that the information (that is, DPID) at which the second indication bit is located is multicast information.

For example, L in FIG. 10 may be defined as G = (0: multicast, 1: unicast).

FIG. 11 is a second schematic flowchart of a data transmission method according to an embodiment of this application. As shown in FIG. 11, the method includes the following steps:
Step 1100: A network-side device determines a data plane identity DPID corresponding to a terminal, the DPID being used to identify the terminal on a data plane.
Step 1110: The network-side device sends the DPID to the terminal.

Optionally, if the terminal needs to send data to the data plane, that is, the data plane needs to obtain data of the terminal, the data plane needs to be able to identify the terminal and can establish a reliable data transmission link with the terminal. In this embodiment of this application, a data plane identity DPID is introduced for local identification of a terminal on the data plane, so that the terminal can be effectively identified without leaking the identity of the UE.

Optionally, the terminal may first obtain its own data plane identity DPID. When the terminal and the data plane are connected and communicated, the data plane can identify the terminal based on the data plane identity DPID, which can effectively prevent the data plane from learning the real identification or real identity of the terminal. A transmission link between the UE and DP can be effectively established for data communication, and the identity of the UE can be ensured not to be leaked, thereby ensuring the security and reliability of data transmission.

Optionally, a data plane identity DPID may be configured and then sent to the terminal by the network-side device.

Optionally, when obtaining a DPID, the terminal may receive a DPID sent by the network-side device.

Optionally, as shown in FIG. 7, since a data plane identity DPID corresponds to identity-related information of a terminal, the network-side device can determine a mapping relationship between the data plane identity DPID and the identity-related information of the terminal when configuring the DPID for the terminal.

Optionally, when sending a DPID to a terminal, the network-side device may send a mapping relationship to the terminal. In this scenario, the network-side device may send a mapping relationship between identity-related information of a terminal and a DPID to the terminal individually, or send the mapping relationship between identity-related information of one or more terminals and DPIDs to the one or more terminals simultaneously.

Optionally, when sending a DPID to a terminal, the network-side device may send to the terminal a DPID corresponding to the terminal. In this scenario, the network-side device may send the DPID corresponding to the terminal to the terminal individually.

Optionally, the network-side device may be the network-side device 12 shown in FIG. 1.

Optionally, the network-side device may be a core network device, such as an access and mobility management function AMF.

Optionally, the network-side device may be an access network device, such as a base station gNB.

Optionally, the DPID corresponding to the terminal may correspond to the identity-related information of the terminal. For example, the DPID corresponding to a terminal may correspond to a C-RNTI of the terminal.

Optionally, the DPID corresponding to the terminal may correspond to the identity-related information of the terminal. For example, the DPID corresponding to a terminal may correspond to a 5G-TMSI of the terminal.

Optionally, the DPID corresponding to the terminal may correspond to the identity-related information of the terminal. For example, the DPID corresponding to a terminal may correspond to a 5G-S-TMSI of the terminal.

Optionally, for a dual-SIM or multi-SIM terminal, each card may correspond to a unique identity, such as a 5G-TMSI, where different 5G-TMSIs can correspond to different DPIDs, respectively.

Optionally, a dual-SIM or multi-SIM terminal may correspond to multiple different DPIDs. For example, a dual-SIM terminal may correspond to 2 different DPIDs, where each DPID corresponds to one SIM of the terminal, respectively.

In this embodiment of this application, the use of the data plane identity DPID to identify the terminal can ensure the identity of the UE not to be leaked on the basis of effectively establishing a transmission link between the UE and DP for data communication.

Optionally, in the embodiments of this application, the data plane may be an independent network element or be co-located with another network entity or arranged around another network entity. For example, the data plane may be co-located with an AMF or provided as an independent network element beside the AMF.

In this embodiment of this application, the data plane identity DPID is introduced for local identification of the terminal on the data plane, and the terminal establishes a connection to the data plane and transmits data using the DPID, so that a transmission link between the UE and DP is effectively established for data communication, and the identity of the UE is ensured not to be leaked, thereby ensuring the security and reliability of data transmission.

Optionally, the obtaining, by the network-side device, a data plane identity DPID corresponding to the terminal includes:
determining, by the network-side device, identity-related information of the terminal; and
determining, by the network-side device, the DPID based on the identity-related information of the terminal; where
the identity-related information of the terminal includes one or more of the following:
   a temporary identifier C-RNTI of the terminal;
   a serving cell index ServCellIndex of the terminal;
   a 5G temporary mobile subscriber identity 5G-TMSI of the terminal;
   a 5G shorted temporary mobile subscriber identity 5G-S-TMSI of the terminal; or
   a MAC address managed locally by the network-side device.

Optionally, the network-side device may determine the DPID corresponding to the terminal based on the identity-related information of the terminal.

Optionally, the network-side device may input the identity-related information of the terminal into a first function to obtain a DPID as output, where the first function can output different DPIDs based on different identity-related information.

Optionally, the first function may be a mathematical operation function.

For example, the identity-related information of the terminal may be added with, subtracted by, or multiplied by a fixed value to obtain a DPID corresponding to the terminal.

For example, two types of information in the identity-related information of the terminal can be added, subtracted, or multiplied to obtain a DPID corresponding to the terminal.

For example, two types of information in the identity-related information of the terminal can be added together and then added with a fixed value, or subtracted and then multiplied by a fixed value, or multiplied and then subtracted by a fixed value to obtain a DPID corresponding to the terminal.

It should be noted that the first function can be any function that outputs different DPIDs based on different identity-related information. This is not limited in this embodiment of this application.

For example, a DPID corresponding to a terminal can be defined as: DPID = locally administered IEEE MAC address = map (5G-TMSI or 5G-S-TMSI, C-RNTI or ServCellIndex) = map (48 bit, 16bit or 5bit) = 48bit;
ServCellIndex ::= INTEGER (0..maxNrofServingCells-1) = (0..31) = 5bit.

For example, a DPID corresponding to a terminal can be defined as: PID = locally administered IEEE MAC address = 5G-S-TMSI.

Optionally, in a case that the network-side device includes a core network function, the determining, by the network-side device, identity-related information of the terminal includes:
receiving, by the network-side device, one or more of the following sent by a first base station:
the serving cell index ServCellIndex of the terminal; or the temporary identifier C-RNTI of the terminal.

Optionally, if the network-side device is a core network function, the 5G temporary mobile subscriber identity 5G-TMSI and/or 5G shorted temporary mobile subscriber identity 5G-S-TMSI of the terminal are known to the network-side device. If more identity-related information of the terminal is desired, the serving cell index ServCellIndex of the terminal and/or the temporary identifier C-RNTI of the terminal can be obtained from a first base station accessed by the terminal.

Optionally, the network-side device can be the first base station accessed by the terminal and/or the core network function.

Optionally, in a case that the network-side device includes a first base station, the determining, by the network-side device, identity-related information of the terminal includes:
receiving, by the network-side device, one or more of the following sent by a core network function:
a 5G temporary mobile subscriber identity 5G-TMSI of the terminal; or
a 5G shorted temporary mobile subscriber identity 5G-S-TMSI of the terminal.

Optionally, if the network-side device is the first base station accessed by the terminal, the 5G temporary mobile subscriber identity 5G-TMSI and/or 5G shorted temporary mobile subscriber identity 5G-S-TMSI of the terminal are unknown to the network-side device, and the serving cell index ServCellIndex of the terminal and/or the temporary identifier C-RNTI of the terminal are known to the network-side device. If more identity-related information of the terminal is desired, the 5G temporary mobile subscriber identity 5G-TMSI of the terminal and/or the 5G shorted temporary mobile subscriber identity 5G-S-TMSI of the terminal can be obtained from a core network device.

Optionally, the determining, by the network-side device, identity-related information of the terminal includes:
receiving, by the network-side device, the identity-related information of the terminal sent by the terminal.

Optionally, for a connectionless (Connectionless) UE, the identity-related information of the terminal is unknown to the network-side device. Then the terminal sends the identity-related information of the terminal to the network-side device, the identity-related information of the terminal being used to determine the DPID. To be specific, after learning the identity-related information of the terminal, the network-side device may determine a DPID corresponding to the terminal based on the identity-related information of the terminal.

Optionally, the method further includes:
sending, by the network-side device, second information to the data plane, the second information including any one or more of the following:
the DPID; or
a region for data collection in which the terminal is capable of performing the data collection.

Optionally, after determining the DPID corresponding to the terminal, the network-side device may send the DPID to the terminal, and may also send the DPID to the data plane.

Optionally, the network-side device can send second information to the data plane, the second information including the DPID and/or the region for the data collection in which the terminal is capable of performing the data collection and reporting.

Optionally, the network-side device may send second information to the data plane, the second information including the DPID and/or the region for the data collection in which the terminal performs the data collection.

Optionally, the method further includes:
sending, by the network-side device, the DPID to a second base station; where
the second base station is a base station in the region for the data collection in which the terminal performs data collection.

Optionally, the network-side device may also send the DPID corresponding to the terminal to a second base station in the region for the data collection in which the terminal performs the data collection;

In this embodiment of this application, the data plane identity DPID is introduced for local identification of the terminal on the data plane, and the terminal establishes a connection to the data plane and transmits data using the DPID, so that a transmission link between the UE and DP is effectively established for data communication, and the identity of the UE is ensured not to be leaked, thereby ensuring the security and reliability of data transmission.

FIG. 12 is a third schematic flowchart of a data transmission method according to an embodiment of this application. As shown in FIG. 12, the method includes the following step.

Step 1200: A second base station obtains a data plane identity DPID corresponding to a terminal, the DPID being used to identify the terminal on a data plane.

If the terminal needs to send data to the data plane, that is, the data plane needs to obtain data of the terminal, the data plane needs to be able to identify the terminal and can establish a reliable data transmission link with the terminal. In this embodiment of this application, a data plane identity DPID is introduced for local identification of a terminal on the data plane, so that the terminal can be effectively identified without leaking the identity of the UE.

Optionally, the terminal may first obtain its own data plane identity DPID. When the terminal and the data plane are connected and communicated, the data plane can identify the terminal based on the data plane identity DPID, which can effectively prevent the data plane from learning the real identification or real identity of the terminal. A transmission link between the UE and DP can be effectively established for data communication, and the identity of the UE can be ensured not to be leaked, thereby ensuring the security and reliability of data transmission.

Optionally, a data plane identity DPID may be configured and then sent to the terminal by the network-side device.

Optionally, the network-side device may send the DPID corresponding to the terminal to a second base station in the region for the data collection in which the terminal performs the data collection.

In this embodiment of this application, the data plane identity DPID is introduced for local identification of the terminal on the data plane, and the terminal establishes a connection to the data plane and transmits data using the DPID, so that a transmission link between the UE and DP is effectively established for data communication, and the identity of the UE is ensured not to be leaked, thereby ensuring the security and reliability of data transmission.

Optionally, the method further includes:
determining, by the second base station, a base station local identity corresponding to the DPID corresponding to the terminal, the base station local identity being used to identify the terminal on the second base station side.

Optionally, the second base station may locally configure the terminal with a base station local identity corresponding to the DPID corresponding to the terminal, the base station local identity being used to identify the terminal on the second base station side.

In this embodiment of this application, the data plane identity DPID for local identification of the terminal on the data plane and the base station local identity for local identification of the terminal on the RAN side are introduced, the terminal establishes a connection to the data plane and transmits data using the DPID, and the base station identifies the terminal using the base station local identity, so that a transmission link between the UE and DP is effectively established for data communication, and the identity of the UE is ensured not to be leaked, thereby ensuring the security and reliability of data transmission.

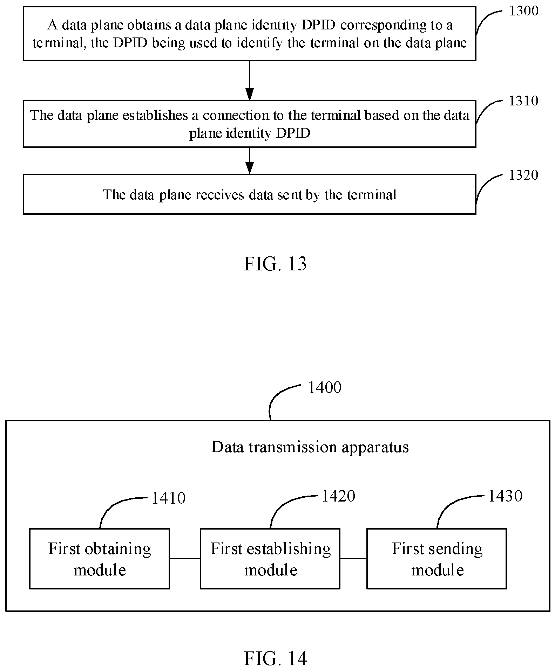

FIG. 13 is a fourth schematic flowchart of a data transmission method according to an embodiment of this application. As shown in FIG. 13, the method includes the following steps:
Step 1300: A data plane obtains a data plane identity DPID corresponding to a terminal, the DPID being used to identify the terminal on a data plane.
Step 1310: The data plane establishes a connection to the terminal based on the data plane identity DPID.
Step 1320: The data plane receives data sent by the terminal.

Optionally, if the terminal needs to send data to the data plane, that is, the data plane needs to obtain data of the terminal, the data plane needs to be able to identify the terminal and can establish a reliable data transmission link with the terminal. In this embodiment of this application, a data plane identity DPID is introduced for local identification of a terminal on the data plane, so that the terminal can be effectively identified without leaking the identity of the UE.

Optionally, the data plane may obtain a data plane identity DPID corresponding to the terminal. When the terminal and the data plane are connected and communicated, the data plane can identify the terminal based on the data plane identity DPID, which can effectively prevent the data plane from learning the real identification or real identity of the terminal. A transmission link between the UE and DP can be effectively established for data communication, and the identity of the UE can be ensured not to be leaked, thereby ensuring the security and reliability of data transmission.

Optionally, the DPID corresponding to the terminal may correspond to the identity-related information of the terminal. For example, the DPID corresponding to a terminal may correspond to a C-RNTI of the terminal.

Optionally, the DPID corresponding to the terminal may correspond to the identity-related information of the terminal. For example, the DPID corresponding to a terminal may correspond to a 5G-TMSI of the terminal.

Optionally, the DPID corresponding to the terminal may correspond to the identity-related information of the terminal. For example, the DPID corresponding to a terminal may correspond to a 5G-S-TMSI of the terminal.

Optionally, for a dual-SIM or multi-SIM terminal, each card may correspond to a unique identity, such as a 5G-TMSI, where different 5G-TMSIs can correspond to different DPIDs, respectively.

Optionally, a dual-SIM or multi-SIM terminal may correspond to multiple different DPIDs. For example, a dual-SIM terminal may correspond to 2 different DPIDs, where each DPID corresponds to one SIM of the terminal, respectively.

In this embodiment of this application, the use of the data plane identity DPID on the data plane to identify the terminal can ensure the identity of the UE not to be leaked on the basis of effectively establishing a transmission link between the UE and DP for data communication.

Optionally, in the embodiments of this application, the data plane may be an independent network element or be co-located with another network entity or arranged around another network entity. For example, the data plane may be co-located with an AMF or provided as an independent network element beside the AMF.

In this embodiment of this application, the data plane identity DPID is introduced for local identification of the terminal on the data plane, and the terminal establishes a connection to the data plane and transmits data using the DPID, so that a transmission link between the UE and DP is effectively established for data communication, and the identity of the UE is ensured not to be leaked, thereby ensuring the security and reliability of data transmission.

Optionally, the method further includes:
sending, by the data plane, configuration information for data collection to the terminal, the configuration information for the data collection being used to indicate the terminal to perform data collection; where
the configuration information for the data collection includes one or more of the following:
   first indication information used to indicate a region for the data collection;
   second indication information used to indicate a type for the data collection;
   third indication information used to indicate a collection period for the data collection; and
   fourth indication information used to indicate a reporting period for the data.

Optionally, after establishing a connection to the terminal using the DPID corresponding to the terminal, the data plane may send the configuration information for the data collection to the terminal, and after the terminal completes the data collection based on the configuration information for the data collection and obtains the data, the data plane receives the data sent by the terminal.

Optionally, after establishing a connection to the terminal and obtaining the DPID corresponding to the terminal, the data plane may send the configuration information for the data collection and the DPID corresponding to the terminal expected to perform data collection to the network-side device. After receiving the information from the data plane, the network-side device may send the configuration information for the data collection to the terminal corresponding to the DPID. After receiving the configuration information for the data collection, the terminal may perform the data collection and then send collected results to the network side using its DPID, and the network-side device forwards the results to the data plane.

For example, as shown in FIG. 8, after establishing a connection to the terminal and obtaining a DPID corresponding to the terminal, a data plane may send configuration information for data collection (such as the PLMN, cell, TA, and RNA shown in FIG. 8) and a DPID corresponding to the terminal expected to perform data collection to a network-side device. For example, after the network-side device receives the information from the data plane, a first base station shown in FIG. 8 may send the configuration information for the data collection (such as PLMN, cell, TA, RNA, and a second base station shown in FIG. 8) to the terminal. After receiving the configuration information for the data collection, the terminal may perform the data collection and then send the collected results to the network-side using the DPID (Report using DPID), and the network-side device forwards the results to the data plane. As shown in FIG. 8, when the DP configures the UE to perform the data collection and reporting, the UE may perform the data collection and report data to the data plane using the DPID.

Optionally, the first indication information used to indicate a region for the data collection may include information of the region for the data collection itself, or may include one piece of information that can indicate the region for the data collection, such as index information or link information. This is not limited in this embodiment of this application.

Optionally, the second indication information used to indicate a type for the data collection may include information of the type for the data collection itself, or may include one piece of information that can indicate the type for the data collection, such as index information or link information. This is not limited in this embodiment of this application.

Optionally, the third indication information used to indicate a collection period for the data collection may include information of the collection period for the data collection itself, or may include one piece of information that can indicate the collection period for the data collection, such as index information or link information. This is not limited in this embodiment of this application.

Optionally, the fourth indication information used to indicate a reporting period for the data may include information of the reporting period for the data itself, or may include one piece of information that can indicate the reporting period for the data, such as index information or link information. This is not limited in this embodiment of this application.

In this embodiment of this application, the data plane identity DPID is introduced for local identification of the terminal on the data plane, and the terminal establishes a connection to the data plane and transmits data using the DPID, so that a transmission link between the UE and DP is effectively established for data communication, and the identity of the UE is ensured not to be leaked, thereby ensuring the security and reliability of data transmission.

The data transmission methods provided in the embodiments of this application can be executed by a data transmission apparatus. In the embodiments of this application, the data transmission apparatus performing the data transmission method is used to describe the data transmission apparatus provided in the embodiments of this application.

FIG. 14 is a first schematic structural diagram of a data transmission apparatus according to an embodiment of this application. As shown in FIG. 14, the data transmission apparatus 1400 includes a first obtaining module 1410, a first establishing module 1420, and a first sending module 1430.

The first obtaining module 1410 is configured to obtain a data plane identity DPID corresponding to the terminal, the DPID being used to identify the terminal on a data plane.

The first establishing module 1420 is configured to establish a connection to the data plane using the DPID.

The first sending module 1430 is configured to send data to the data plane using the DPID.

In this embodiment of this application, the data plane identity DPID is introduced for local identification of the terminal on the data plane, and the terminal establishes a connection to the data plane and transmits data using the DPID, so that a transmission link between the UE and DP is effectively established for data communication, and the identity of the UE is ensured not to be leaked, thereby ensuring the security and reliability of data transmission.

Optionally, the first obtaining module is specifically configured to:
receive the DPID sent by a network-side device.

Optionally, the apparatus further includes:
a first determining module, configured to determine configuration information for data collection; and
a second obtaining module, configured to obtain the data based on the configuration information for the data collection; where
the configuration information for the data collection includes one or more of the following:
   first indication information used to indicate a region for the data collection;
   second indication information used to indicate a type for the data collection;
   third indication information used to indicate a collection period for the data collection; and
   fourth indication information used to indicate a reporting period for the data.

Optionally, in a case that the configuration information for the data collection includes the fourth indication information, the first sending module is specifically configured to:
send the data to the data plane using the DPID based on the reporting period for the data.

Optionally, in a case that the configuration information for the data collection includes the first indication information, the second obtaining module is specifically configured to:
perform the data collection in the region for the data collection to obtain the data.

Optionally, in a case that the configuration information for the data collection includes the second indication information, the second obtaining module is specifically configured to:
perform the data collection based on the type to obtain the data corresponding to the type.

Optionally, in a case that the configuration information for the data collection includes the third indication information, the second obtaining module is specifically configured to:
perform the data collection based on the collection period to obtain the data.

Optionally, before a terminal obtains a data plane identity DPID corresponding to the terminal, in a case that the terminal has completed access, the apparatus further includes:
a second sending module, configured to send first information to a network-side device, the first information being used to indicate that the data plane is allowed to obtain data of the terminal.

Optionally, before the terminal obtains a data plane identity DPID corresponding to the terminal, in a case that the terminal has not completed access, the apparatus further includes:
a third sending module, configured to send identity-related information of the terminal to the network-side device, the identity-related information of the terminal being used to determine the DPID; where
different terminals have different DPIDs.

Optionally, before the terminal establishes a connection to the data plane using the DPID, the apparatus further includes:
a second establishing module, configured to establish an RRC connection to a first base station.

Optionally, the first establishing module is specifically configured to:
establish an Ethernet Ethernet transmission channel with the data plane using the DPID.

Optionally, the DPID includes a first indication bit, the first indication bit being used to indicate that the DPID is used for local management by the data plane to the terminal.

Optionally, the DPID includes a second indication bit, the second indication bit being used to indicate that information carrying the DPID is any of the following: unicast information or multicast information.

In this embodiment of this application, the data plane identity DPID is introduced for local identification of the terminal on the data plane, and the terminal establishes a connection to the data plane and transmits data using the DPID, so that a transmission link between the UE and DP is effectively established for data communication, and the identity of the UE is ensured not to be leaked, thereby ensuring the security and reliability of data transmission.

The data transmission apparatus in this embodiment of this application may be an electronic device such as an electronic device with an operating system, or a component in an electronic device such as an integrated circuit or chip. The electronic device may be a terminal or a device other than terminals. For example, the terminal may include but is not limited to the types of the terminal 11 listed above, and the other device may be a server, a network attached storage (Network Attached Storage, NAS), or the like. This is not specifically limited in this embodiment of this application.

The data transmission apparatuses provided in this embodiment of this application can implement the processes that are implemented in the method embodiments of FIG. 6 to FIG. 10, with the same technical effects achieved. To avoid repetition, details are not repeated herein.

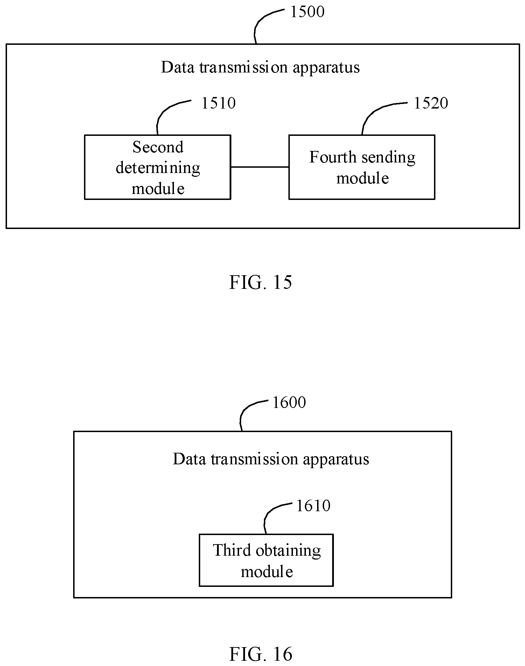

FIG. 15 is a second schematic structural diagram of a data transmission apparatus according to an embodiment of this application. As shown in FIG. 15, the data transmission apparatus 1500 includes a second determining module 1510 and a fourth sending module 1520.

The second determining module 1510 is configured to determine a data plane identity DPID corresponding to a terminal, the DPID being used to identify the terminal on a data plane.

The fourth sending module 1520 is configured to send the DPID to the terminal.

In this embodiment of this application, the data plane identity DPID is introduced for local identification of the terminal on the data plane, and the terminal establishes a connection to the data plane and transmits data using the DPID, so that a transmission link between the UE and DP is effectively established for data communication, and the identity of the UE is ensured not to be leaked, thereby ensuring the security and reliability of data transmission.

Optionally, the second determining module is specifically configured to:
determine identity-related information of the terminal; and
determine the DPID based on the identity-related information of the terminal; where
the identity-related information of the terminal includes one or more of the following:
   a temporary identifier C-RNTI of the terminal;
   a serving cell index ServCellIndex of the terminal;
   a 5G temporary mobile subscriber identity 5G-TMSI of the terminal;
   a 5G shorted temporary mobile subscriber identity 5G-S-TMSI of the terminal; or
   a MAC address managed locally by the network-side device.

Optionally, in a case that the network-side device includes a core network function, the second determining module is specifically configured to:
receive one or more of the following sent by a first base station:
the serving cell index ServCellIndex of the terminal; or the temporary identifier C-RNTI of the terminal.

Optionally, in a case that the network-side device includes a first base station, the second determining module is specifically configured to:
receive one or more of the following sent by a core network function:
a 5G temporary mobile subscriber identity 5G-TMSI of the terminal; or
a 5G shorted temporary mobile subscriber identity 5G-S-TMSI of the terminal.

Optionally, the second determining module is specifically configured to:
receive the identity-related information of the terminal sent by the terminal.

Optionally, the apparatus further includes:
a fifth sending module, configured to send second information to the data plane, the second information including any one or more of the following:
the DPID; or
a region for data collection in which the terminal is capable of performing the data collection.

Optionally, the apparatus further includes:
a sixth sending module, configured to send the DPID to a second base station; where
the second base station is a base station in the region for the data collection in which the terminal performs data collection.

In this embodiment of this application, the data plane identity DPID is introduced for local identification of the terminal on the data plane, and the terminal establishes a connection to the data plane and transmits data using the DPID, so that a transmission link between the UE and DP is effectively established for data communication, and the identity of the UE is ensured not to be leaked, thereby ensuring the security and reliability of data transmission.

The data transmission apparatus in this embodiment of this application may be an electronic device, or may be a component in an electronic device such as an integrated circuit or chip. The electronic device may be a terminal or a device other than terminals. For example, the electronic device may be a mobile phone, a tablet personal computer, a notebook computer, a palmtop computer, a vehicle-mounted electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), or may be a server, a network attached storage (Network Attached Storage, NAS), a personal computer (personal computer, PC), a television (television, TV), a teller machine, a self-service machine, or the like. This is not specifically limited in this embodiment of this application.

The data transmission apparatus in this embodiment of this application may be an apparatus with an operating system. The operating system may be an Android (Android) operating system, an iOS operating system, or other possible operating systems. This is not specifically limited in this embodiment of this application.

The data transmission apparatuses provided in this embodiment of this application can implement the processes that are implemented in the method embodiment of FIG. 11, with the same technical effects achieved. To avoid repetition, details are not repeated herein.

FIG. 16 is a third schematic structural diagram of a data transmission apparatus according to an embodiment of this application. As shown in FIG. 16, the data transmission apparatus 1600 includes a third obtaining module 1610.

The third obtaining module 1610 is configured to obtain a data plane identity DPID corresponding to a terminal, the DPID being used to identify the terminal on a data plane.

In this embodiment of this application, the data plane identity DPID is introduced for local identification of the terminal on the data plane, and the terminal establishes a connection to the data plane and transmits data using the DPID, so that a transmission link between the UE and DP is effectively established for data communication, and the identity of the UE is ensured not to be leaked, thereby ensuring the security and reliability of data transmission.

Optionally, the apparatus further includes:
a third determining module, configured to determine a base station local identity corresponding to the DPID corresponding to the terminal, the base station local identity being used to identify the terminal on the second base station side.

In this embodiment of this application, the data plane identity DPID is introduced for local identification of the terminal on the data plane, and the terminal establishes a connection to the data plane and transmits data using the DPID, so that a transmission link between the UE and DP is effectively established for data communication, and the identity of the UE is ensured not to be leaked, thereby ensuring the security and reliability of data transmission.

The data transmission apparatus in this embodiment of this application may be an electronic device, or may be a component in an electronic device such as an integrated circuit or chip. The electronic device may be a terminal or a device other than terminals. For example, the electronic device may be a mobile phone, a tablet personal computer, a notebook computer, a palmtop computer, a vehicle-mounted electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), or may be a server, a network attached storage (Network Attached Storage, NAS), a personal computer (personal computer, PC), a television (television, TV), a teller machine, a self-service machine, or the like. This is not specifically limited in this embodiment of this application.

The data transmission apparatus in this embodiment of this application may be an apparatus with an operating system. The operating system may be an Android (Android) operating system, an iOS operating system, or other possible operating systems. This is not specifically limited in this embodiment of this application.

The data transmission apparatuses provided in this embodiment of this application can implement the processes that are implemented in the method embodiment of FIG. 12, with the same technical effects achieved. To avoid repetition, details are not repeated herein.

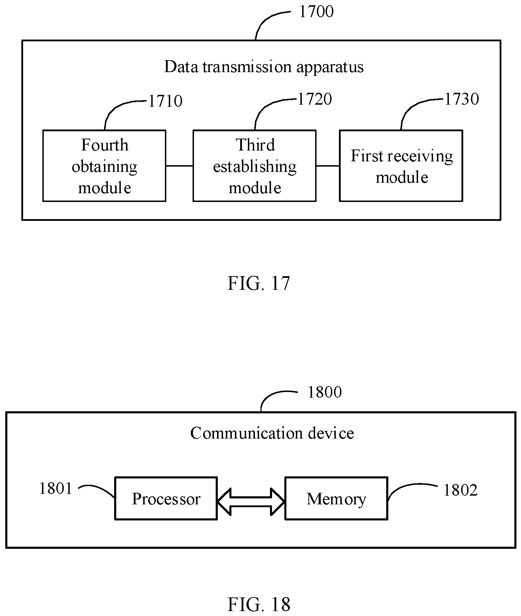

FIG. 17 is a fourth schematic structural diagram of a data transmission apparatus according to an embodiment of this application. As shown in FIG. 17, the data transmission apparatus 1700 includes a fourth obtaining module 1710, a third establishing module 1720, and a first receiving module 1730.

The fourth obtaining module 1710 is configured to obtain a data plane identity DPID corresponding to a terminal, the DPID being used to identify the terminal on a data plane.

The third establishing module 1720 is configured to establish a connection to the terminal based on the data plane identity DPID.

The first receiving module 1730 is configured to receive data sent by the terminal.

In this embodiment of this application, the data plane identity DPID is introduced for local identification of the terminal on the data plane, and the terminal establishes a connection to the data plane and transmits data using the DPID, so that a transmission link between the UE and DP is effectively established for data communication, and the identity of the UE is ensured not to be leaked, thereby ensuring the security and reliability of data transmission.

Optionally, the apparatus further includes a seventh sending module configured to send configuration information for data collection to the terminal, the configuration information for the data collection being used to indicate the terminal to perform data collection; where
the configuration information for the data collection includes one or more of the following:
first indication information used to indicate a region for the data collection;
second indication information used to indicate a type for the data collection;
third indication information used to indicate a collection period for the data collection; and
fourth indication information used to indicate a reporting period for the data.

In this embodiment of this application, the data plane identity DPID is introduced for local identification of the terminal on the data plane, and the terminal establishes a connection to the data plane and transmits data using the DPID, so that a transmission link between the UE and DP is effectively established for data communication, and the identity of the UE is ensured not to be leaked, thereby ensuring the security and reliability of data transmission.

The data transmission apparatus in this embodiment of this application may be an electronic device such as an electronic device with an operating system, or a component in an electronic device such as an integrated circuit or chip. The electronic device may be a terminal or a device other than terminals. For example, the terminal may include but is not limited to the types of the terminal 11 listed above, and the other device may be a server, a network attached storage (Network Attached Storage, NAS), or the like. This is not specifically limited in this embodiment of this application.

The data transmission apparatuses provided in this embodiment of this application can implement the processes that are implemented in the method embodiment of FIG. 13, with the same technical effects achieved. To avoid repetition, details are not repeated herein.

Optionally, FIG. 18 is a schematic structural diagram of a communication device according to an embodiment of this application. As shown in FIG. 18, an embodiment of this application further provides a communication device 1800 including a processor 1801 and a memory 1802. The memory 1802 has stored thereon a program or instruction executable on the processor 1801. For example, if the communication device 1800 is a terminal, when the program or instruction is executed by the processor 1801, the steps of the foregoing embodiments of the data transmission methods are implemented, with the same technical effects achieved. When the communication device 1800 is a network-side device, the program or instruction is executed by the processor 1801 to implement the steps of the foregoing embodiments of the data transmission methods, with the same technical effects achieved. To avoid repetition, details are not repeated herein.

An embodiment of this application further provides a terminal including a processor and a communication interface, where the processor is configured to:
obtain a data plane identity DPID corresponding to the terminal, the DPID being used to identify the terminal on a data plane; and
establish a connection to the data plane using the DPID; and
the communication interface is configured to:
   send data to the data plane using the DPID.

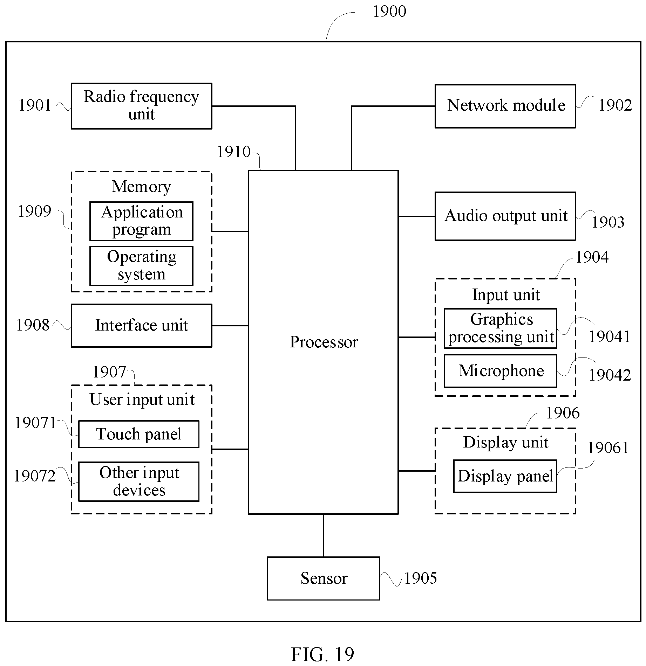

This terminal embodiment corresponds to the foregoing method embodiment on the terminal side. All processes and implementations in the foregoing method embodiment are applicable to this terminal embodiment, with the same technical effects achieved. Specifically, FIG. 19 is a schematic diagram of a hardware structure of a terminal implementing the embodiments of this application.

The terminal 1900 includes but is not limited to at least part of these components: a radio frequency unit 1901, a network module 1902, an audio output unit 1903, an input unit 1904, a sensor 1905, a display unit 1906, a user input unit 1907, an interface unit 1908, a memory 1909, a processor 1910, and the like.

Persons skilled in the art can understand that the terminal 1900 may further include a power supply (for example, a battery) supplying power to the components, and the power supply may be logically connected to the processor 1910 through a power management system. In this way, functions such as charge management, discharge management, and power consumption management are implemented by using the power management system. The structure of the terminal shown in FIG. 19 does not constitute any limitation on the terminal. The terminal may include more or fewer components than shown in the figure, or a combination of some components, or the components disposed differently. Details are not described herein again.

It should be understood that in this embodiment of this application, the input unit 1904 may include a graphics processing unit (graphics processing unit, GPU) 19041 and a microphone 19042. The graphics processing unit 19041 processes image data of a static picture or a video that is obtained by an image capture apparatus (for example, a camera) in a video capture mode or an image capture mode. The display unit 1906 may include a display panel 19061, and the display panel 19061 may be configured in a form of a liquid crystal display, an organic light-emitting diode, and the like. The user input unit 1907 includes at least one of a touch panel 19071 and other input devices 19072. The touch panel 19071 is also referred to as a touchscreen. The touch panel 19071 may include two parts: a touch detection apparatus and a touch controller. The other input devices 19072 may include but are not limited to a physical keyboard, a function key (for example, a volume control key or a power on/off key), a trackball, a mouse, a joystick, and the like. Details are not described herein.

In an embodiment of this application, the radio frequency unit 1901 receives downlink data from a network-side device and sends the data to the processor 1910 for processing; and the radio frequency unit 1901 can additionally send uplink data to the network-side device. Generally, the radio frequency unit 1901 includes but is not limited to an antenna, an amplifier, a transceiver, a coupler, a low noise amplifier, a duplexer, and the like.

The memory 1909 may be configured to store software programs or instructions and various data. The memory 1909 may include a first storage area for storing programs or instructions and a second storage area for storing data. The first storage area may store an operating system, an application program or instructions required by at least one function (for example, a sound playback function or an image playback function), and the like. Additionally, the memory 1909 may be a volatile memory or a non-volatile memory, or the memory 1909 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1909 in the embodiments of this application includes but is not be limited to these or any other applicable types of memories.

The processor 1910 may include one or more processing units. Optionally, the processor 1910 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 1910.

The processor 1910 is configured to:
obtain a data plane identity DPID corresponding to the terminal, the DPID being used to identify the terminal on a data plane; and
establish a connection to the data plane using the DPID.

The radio frequency unit 1901 is configured to:
send data to the data plane using the DPID.

In this embodiment of this application, the data plane identity DPID is introduced for local identification of the terminal on the data plane, and the terminal establishes a connection to the data plane and transmits data using the DPID, so that a transmission link between the UE and DP is effectively established for data communication, and the identity of the UE is ensured not to be leaked, thereby ensuring the security and reliability of data transmission.

Optionally, the processor 1910 is configured to:
receive the DPID sent by a network-side device.

Optionally, the processor 1910 is configured to:
determine configuration information for data collection; and
obtain the data based on the configuration information for the data collection; where
the configuration information for the data collection includes one or more of the following:
   first indication information used to indicate a region for the data collection;
   second indication information used to indicate a type for the data collection;
   third indication information used to indicate a collection period for the data collection; and
   fourth indication information used to indicate a reporting period for the data.

Optionally, in a case that the configuration information for the data collection includes the fourth indication information, the processor 1910 is configured to:
send the data to the data plane using the DPID based on the reporting period for the data.

Optionally, in a case that the configuration information for the data collection includes the first indication information, the processor 1910 is configured to:
perform the data collection in the region for the data collection to obtain the data.

Optionally, in a case that the configuration information for the data collection includes the second indication information, the processor 1910 is configured to:
perform the data collection based on the type to obtain the data corresponding to the type.

Optionally, in a case that the configuration information for the data collection includes the third indication information, the processor 1910 is configured to:
perform the data collection based on the collection period to obtain the data.

Optionally, before the terminal obtains a data plane identity DPID corresponding to the terminal, the processor 1910 is configured to:
send first information to the network-side device, the first information being used to indicate that the data plane is allowed to obtain data of the terminal.

Optionally, before the terminal obtains a data plane identity DPID corresponding to the terminal, the processor 1910 is configured to:
send identity-related information of the terminal to the network-side device, the identity-related information of the terminal being used to determine the DPID; where
different terminals have different DPIDs.

Optionally, before the terminal establishes a connection to the data plane using the DPID, the processor 1910 is configured to:
establish an RRC connection to the first base station.

Optionally, the processor 1910 is configured to:
establish an Ethernet Ethernet transmission channel with the data plane using the DPID.

Optionally, the DPID includes a first indication bit, the first indication bit being used to indicate that the DPID is used for local management by the data plane to the terminal.

Optionally, the DPID includes a second indication bit, the second indication bit being used to indicate that information carrying the DPID is any of the following: unicast information or multicast information.

In this embodiment of this application, the data plane identity DPID is introduced for local identification of the terminal on the data plane, and the terminal establishes a connection to the data plane and transmits data using the DPID, so that a transmission link between the UE and DP is effectively established for data communication, and the identity of the UE is ensured not to be leaked, thereby ensuring the security and reliability of data transmission.

An embodiment of this application further provides a network-side device, including a processor and a communication interface, where the processor is configured to:
determine a data plane identity DPID corresponding to a terminal, the DPID being used to identify the terminal on a data plane; and
the communication interface is configured to:
   send the DCI to the terminal.

This network-side device embodiment corresponds to the foregoing network-side device method embodiment. All processes and implementations in the foregoing method embodiment are applicable to this network-side device embodiment, with the same technical effects achieved.

Specifically, an embodiment of this application further provides a network-side device.

Optionally, the network-side device may be an access network device.

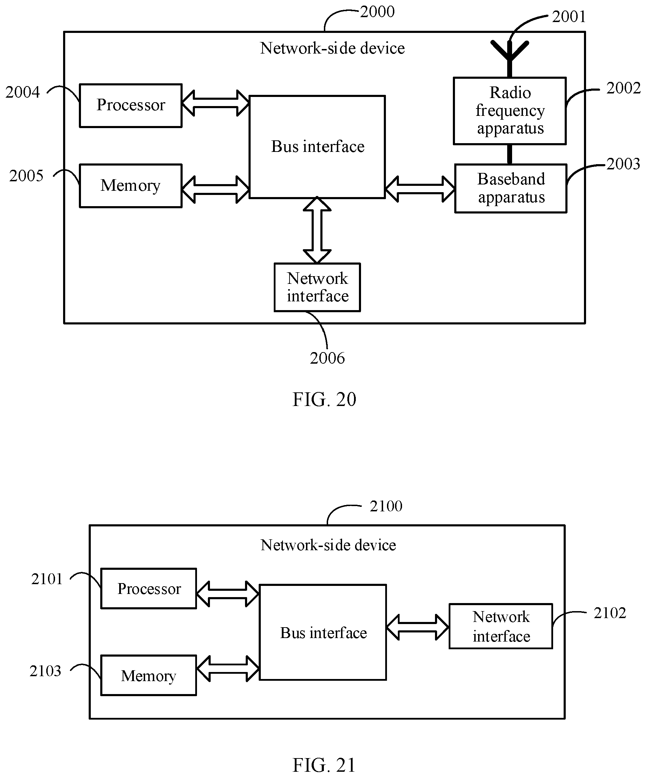

FIG. 20 is a first schematic diagram of a hardware structure of a network-side device implementing an embodiment of this application. As shown in FIG. 20, the network-side device 2000 includes an antenna 2001, a radio frequency apparatus 2002, a baseband apparatus 2003, a processor 2004, and a memory 2005. The antenna 2001 is connected to the radio frequency apparatus 2002. In uplink, the radio frequency apparatus 2002 receives information through the antenna 2001, and sends the received information to the baseband apparatus 2003 for processing. In downlink, the baseband apparatus 2003 processes to-be-sent information, and sends the information to the radio frequency apparatus 2002; and the radio frequency apparatus 2002 processes the received information and then sends the information out through the antenna 2001.

The method executed by the network-side device in the foregoing embodiment may be implemented on the baseband apparatus 2003. The baseband apparatus 2003 includes a baseband processor.

The baseband apparatus 2003 may include, for example, at least one baseband processing unit, where a plurality of chips are disposed on the baseband processing unit. As shown in FIG. 20, one of the chips is, for example, a baseband processor, and connected to the memory 2005 through a bus interface, to invoke the program in the memory 2005 to perform the operations of the network device shown in the foregoing method embodiment.

The network-side device may further include a network interface 2006, where the interface is, for example, a common public radio interface (common public radio interface, CPRI).

Specifically, the network-side device 2000 in this embodiment of the present invention further includes: an instruction or program stored in the memory 2005 and executable on the processor 2004. The processor 2004 invokes the instruction or program in the memory 2005 to execute the method executed by the modules shown in FIG. 15, with the same technical effects achieved. To avoid repetition, details are not repeated herein.

Optionally, the network-side device may be a core network device. FIG. 21 is a second schematic diagram of a hardware structure of a network-side device implementing an embodiment of this application. As shown in FIG. 21, the network-side device 2100 includes a processor 2101, a network interface 2102, and memory 2103. The network interface 2102 is, for example, a common public radio interface (Common Public Radio Interface, CPRI).

Specifically, the network-side device 2100 in this embodiment of the present invention further includes an instruction or program stored in the memory 2103 and executable on the processor 2101. The processor 2101 invokes the instruction or program in the memory 2103 to execute the method executed by the modules shown in FIG. 15, with the same technical effects achieved. To avoid repetition, details are not repeated herein.

An embodiment of this application further provides a second base station including a processor and a communication interface, where the processor is configured to:
obtain a data plane identity DPID corresponding to a terminal, the DPID being used to identify the terminal on a data plane.

This second base station embodiment corresponds to the foregoing second base station method embodiment. All processes and implementations in the foregoing method embodiment can be applicable to this second base station embodiment, with the same technical effects achieved.

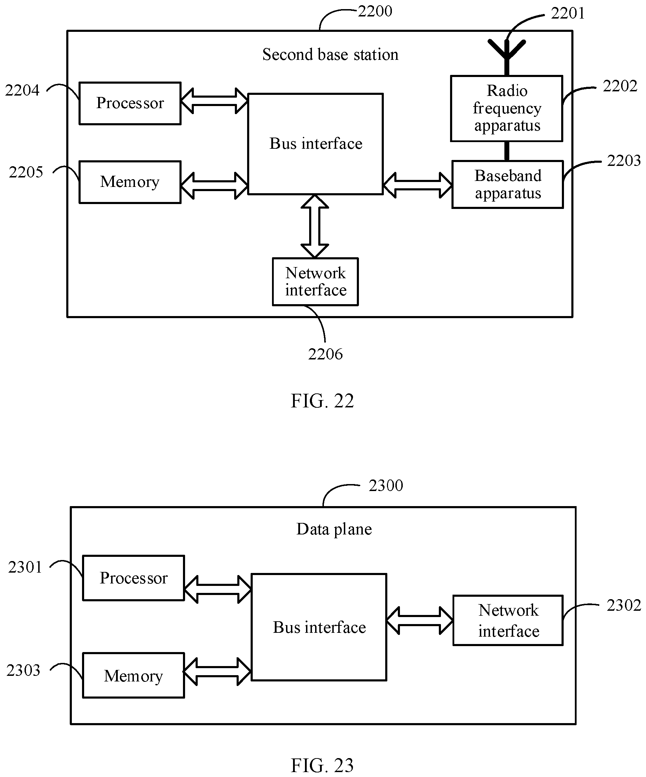

FIG. 22 is a schematic diagram of a hardware structure of a second base station implementing an embodiment of this application. As shown in FIG. 22, the second base station 2200 includes an antenna 2201, a radio frequency apparatus 2202, a baseband apparatus 2203, a processor 2204, and memory 2205. The antenna 2201 is connected to the radio frequency apparatus 2202. In uplink, the radio frequency apparatus 2202 receives information through the antenna 2201, and sends the received information to the baseband apparatus 2203 for processing. In downlink, the baseband apparatus 2203 processes to-be-sent information, and sends the information to the radio frequency apparatus 2202; and the radio frequency apparatus 2202 processes the received information and then sends the information out through the antenna 2201.

The method executed by the second base station in the foregoing embodiment may be implemented on the baseband apparatus 2203. The baseband apparatus 2203 includes a baseband processor.

The baseband apparatus 2203 may include, for example, at least one baseband processing unit, where a plurality of chips are disposed on the baseband processing unit. As shown in FIG. 22, one of the chips is, for example, a baseband processor, and connected to the memory 2205 through a bus interface, to invoke the program in the memory 2205 to perform the operations of the second base station shown in the foregoing method embodiment.

The second base station may further include a network interface 2206. The interface is, for example, a common public radio interface (common public radio interface, CPRI).

Specifically, the second base station 2200 in this embodiment of the present invention further includes an instruction or program stored in the memory 2205 and executable on the processor 2204. The processor 2204 invokes the instruction or program in the memory 2205 to execute the method executed by the modules shown in FIG. 16, with the same technical effects achieved. To avoid repetition, details are not repeated herein.

An embodiment of this application further provides a data plane including a processor and a communication interface, where the processor is configured to:
obtain a data plane identity DPID corresponding to a terminal, the DPID being used to identify the terminal on a data plane; and
establish a connection to the terminal based on the data plane identity DPID; and
the communication interface is configured to:
   receive data sent by the terminal.

This data plane embodiment corresponds to the foregoing data plane method embodiment. All processes and implementations in the foregoing method embodiment can be applicable to this data plane embodiment, with the same technical effects achieved.

FIG. 23 is a schematic diagram of a hardware structure of a data plane implementing an embodiment of this application. As shown in FIG. 23, the data plane 2300 includes a processor 2301, a network interface 2302, and memory 2303. The network interface 2302 is, for example, a common public radio interface (Common Public Radio Interface, CPRI).

Specifically, the data plane 2300 in this embodiment of the present invention further includes an instruction or program stored in the memory 2303 and executable on the processor 2301. The processor 2301 invokes the instruction or program in the memory 2303 to execute the method executed by the modules shown in FIG. 17, with the same technical effects achieved. To avoid repetition, details are not repeated herein.

An embodiment of this application further provides a readable storage medium, where the readable storage medium stores a program or instructions, and when the program or instructions are executed by a processor, the processes of the foregoing data transmission method embodiments are implemented, with the same technical effects achieved. To avoid repetition, details are not repeated herein.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instruction, to implement the processes of the foregoing embodiments of the data transmission methods, with the same technical effects achieved. To avoid repetition, details are not repeated herein.

It should be understood that the chip mentioned in an embodiment of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the processes of the foregoing embodiments of the data transmission methods, with the same technical effects achieved. To avoid repetition, details are not repeated herein.

An embodiment of this application further provides a data transmission system, including a terminal, a network-side device, a second base station, and a data plane. The terminal may be configured to execute the steps of the data transmission method corresponding to the terminal side. The network-side device may be configured to execute the steps of the data transmission method corresponding to the network-side device. The second base station may be configured to execute the step of the data transmission method corresponding to the second base station. The data plane may be configured to execute the steps of the data transmission method corresponding to the data plane.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Based on the above description of embodiments, persons skilled in the art can clearly understand that the method in the foregoing embodiments can be implemented through software on a necessary general hardware platform or certainly through hardware only, but in many cases, the former is the more preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A data transmission method, comprising:
obtaining, by a terminal, a data plane identity DPID corresponding to the terminal, the DPID being used to identify the terminal on a data plane;
establishing, by the terminal, a connection to the data plane using the DPID; and
sending, by the terminal, data to the data plane using the DPID.

2. The data transmission method according to claim 1, wherein the obtaining, by the terminal, the data plane identity DPID corresponding to the terminal comprises:
receiving, by the terminal, the DPID sent by a network-side device.

3. The data transmission method according to claim 1 or 2, wherein the method further comprises:
determining, by the terminal, configuration information for data collection; and
obtaining, by the terminal, the data based on the configuration information for the data collection; wherein
the configuration information for the data collection comprises one or more of the following:
first indication information used to indicate a region for the data collection;
second indication information used to indicate a type for the data collection;
third indication information used to indicate a collection period for the data collection; and
fourth indication information used to indicate a reporting period for the data.

4. The data transmission method according to claim 3, wherein in a case that the configuration information for the data collection comprises the fourth indication information, the sending, by the terminal, the data to the data plane using the DPID comprises:
sending, by the terminal, the data to the data plane using the DPID based on the reporting period for the data.

5. The data transmission method according to claim 3, wherein in a case that the configuration information for the data collection comprises the first indication information, the obtaining, by the terminal, the data based on the configuration information for the data collection comprises:
performing, by the terminal, the data collection in the region for the data collection to obtain the data.

6. The data transmission method according to claim 3, wherein in a case that the configuration information for the data collection comprises the second indication information, the obtaining, by the terminal, the data based on the configuration information for the data collection comprises:
performing, by the terminal, the data collection based on the type to obtain data corresponding to the type.

7. The data transmission method according to claim 3, wherein in a case that the configuration information for the data collection comprises the third indication information, the obtaining, by the terminal, the data based on the configuration information for the data collection comprises:
performing, by the terminal, the data collection based on the collection period to obtain the data.

8. The data transmission method according to any one of claims 1 to 7, wherein before the obtaining, by the terminal, the data plane identity DPID corresponding to the terminal, in a case that the terminal has completed access, the method further comprises:
sending, by the terminal, first information to a network-side device, the first information being used to indicate that the data plane is allowed to obtain data of the terminal.

9. The data transmission method according to any one of claims 1 to 7, wherein before the obtaining, by the terminal, the data plane identity DPID corresponding to the terminal, in a case that the terminal has not completed access, the method further comprises:
sending, by the terminal, identity-related information of the terminal to a network-side device, the identity-related information of the terminal being used to determine the DPID; wherein
different terminals have different DPIDs.

10. The data transmission method according to claim 9, wherein before the establishing, by the terminal, the connection to the data plane using the DPID, the method further comprises:
establishing, by the terminal, an RRC connection to a first base station.

11. The data transmission method according to claim 9 or 10, wherein the establishing, by the terminal, the connection to the data plane using the DPID further comprises:
establishing, by the terminal, an Ethernet transmission channel with the data plane using the DPID.

12. The data transmission method according to any one of claims 1 to 11, wherein the DPID comprises a first indication bit, the first indication bit being used to indicate that the DPID is used for local management by the data plane to the terminal.

13. The data transmission method according to any one of claims 1 to 11, wherein the DPID comprises a second indication bit, the second indication bit being used to indicate that information carrying the DPID is any of the following: unicast information or multicast information.

14. A data transmission method, comprising:
determining, by a network-side device, a data plane identity DPID corresponding to a terminal, the DPID being used to identify the terminal on a data plane; and
sending, by the network-side device, the DPID to the terminal.

15. The data transmission method according to claim 14, wherein the determining, by the network-side device, the data plane identity DPID corresponding to the terminal comprises:
determining, by the network-side device, identity-related information of the terminal; and
determining, by the network-side device, the DPID based on the identity-related information of the terminal; wherein
the identity-related information of the terminal comprises one or more of the following:
a temporary identifier C-RNTI of the terminal;
a serving cell index ServCellIndex of the terminal;
a 5G temporary mobile subscriber identity 5G-TMSI of the terminal;
a 5G shorted temporary mobile subscriber identity 5G-S-TMSI of the terminal; or
a MAC address managed locally by the network-side device.

16. The data transmission method according to claim 15, wherein in a case that the network-side device comprises a core network function, the determining, by the network-side device, the identity-related information of the terminal comprises:
receiving, by the network-side device, one or more of the following sent by a first base station:
the serving cell index ServCellIndex of the terminal; or the temporary identifier C-RNTI of the terminal.

17. The data transmission method according to claim 15, wherein in a case that the network-side device comprises a first base station, the determining, by the network-side device, the identity-related information of the terminal comprises:
receiving, by the network-side device, one or more of the following sent by a core network function:
the 5G temporary mobile subscriber identity 5G-TMSI of the terminal; or
the 5G shorted temporary mobile subscriber identity 5G-S-TMSI of the terminal.

18. The data transmission method according to claim 15, wherein the determining, by the network-side device, the identity-related information of the terminal comprises:
receiving, by the network-side device, the identity-related information of the terminal sent by the terminal.

19. The data transmission method according to any one of claims 14 to 18, wherein the method further comprises:
sending, by the network-side device, second information to the data plane, the second information comprising any one or more of the following:
the DPID; or
a region for data collection in which the terminal is capable of performing the data collection.

20. The data transmission method according to any one of claims 14 to 19, wherein the method further comprises:
sending, by the network-side device, the DPID to a second base station; wherein
the second base station is a base station in a region for data collection in which the terminal performs the data collection.

21. A data transmission method, comprising:
obtaining, by a second base station, a data plane identity DPID corresponding to a terminal, the DPID being used to identify the terminal on a data plane.

22. The data transmission method according to claim 21, wherein the method further comprises:
determining, by the second base station, a base station local identity corresponding to the DPID corresponding to the terminal, the base station local identity being used to identify the terminal on the second base station side.

23. A data transmission method, comprising:
obtaining, by a data plane, a data plane identity DPID corresponding to a terminal, the DPID being used to identify the terminal on the data plane;
establishing, by the data plane, a connection to the terminal based on the data plane identity DPID; and
receiving, by the data plane, data sent by the terminal.

24. The data transmission method according to claim 23, wherein the method further comprises:
sending, by the data plane, configuration information for data collection to the terminal, the configuration information for the data collection being used to indicate the terminal to perform data collection; wherein
the configuration information for the data collection comprises one or more of the following:
first indication information used to indicate a region for the data collection;
second indication information used to indicate a type for the data collection;
third indication information used to indicate a collection period for the data collection; and
fourth indication information used to indicate a reporting period for the data.

25. A data transmission apparatus, comprising:
a first obtaining module, configured to obtain a data plane identity DPID corresponding to the terminal, the DPID being used to identify the terminal on a data plane;
a first establishing module, configured to establish a connection to the data plane using the DPID; and
a first sending module, configured to send data to the data plane using the DPID.

26. The data transmission apparatus according to claim 25, wherein the first obtaining module is specifically configured to:
receive the DPID sent by a network-side device.

27. The data transmission apparatus according to claim 25 or 26, wherein the apparatus further comprises:
a first determining module, configured to determine configuration information for data collection; and
a second obtaining module, configured to obtain the data based on the configuration information for the data collection; wherein
the configuration information for the data collection comprises one or more of the following:
first indication information used to indicate a region for the data collection;
second indication information used to indicate a type for the data collection;
third indication information used to indicate a collection period for the data collection; and
fourth indication information used to indicate a reporting period for the data.

28. The data transmission apparatus according to claim 27, wherein in a case that the configuration information for the data collection comprises the fourth indication information, the first sending module is specifically configured to:
send the data to the data plane using the DPID based on the reporting period for the data.

29. The data transmission apparatus according to claim 27, wherein in a case that the configuration information for the data collection comprises the first indication information, the second obtaining module is specifically configured to:
perform the data collection in the region for the data collection to obtain the data.

30. The data transmission apparatus according to claim 27, wherein in a case that the configuration information for the data collection comprises the second indication information, the second obtaining module is specifically configured to:
perform the data collection based on the type to obtain the data corresponding to the type.

31. The data transmission apparatus according to claim 27, wherein in a case that the configuration information for the data collection comprises the third indication information, the second obtaining module is specifically configured to:
perform the data collection based on the collection period to obtain the data.

32. The data transmission apparatus according to any one of claims 25 to 31, wherein before the obtaining, by the terminal, the data plane identity DPID corresponding to the terminal, in a case that the terminal has completed access, the apparatus further comprises:
a second sending module, configured to send first information to a network-side device, the first information being used to indicate that the data plane is allowed to obtain data of the terminal.

33. The data transmission apparatus according to any one of claims 25 to 31, wherein before the obtaining, by the terminal, the data plane identity DPID corresponding to the terminal, in a case that the terminal has not completed access, the apparatus further comprises:
a third sending module, configured to send identity-related information of the terminal to a network-side device, the identity-related information of the terminal being used to determine the DPID; wherein
different terminals have different DPIDs.

34. The data transmission apparatus according to claim 33, wherein before the establishing, by the terminal, the connection to the data plane using the DPID, the apparatus further comprises:
a second establishing module, configured to establish an RRC connection to a first base station.

35. The data transmission apparatus according to claim 33 or 34, wherein the first establishing module is specifically configured to:
establish an Ethernet transmission channel with the data plane using the DPID.

36. The data transmission apparatus according to any one of claims 25 to 35, wherein the DPID comprises a first indication bit, the first indication bit being used to indicate that the DPID is used for local management by the data plane to the terminal.

37. The data transmission apparatus according to any one of claims 25 to 35, wherein the DPID comprises a second indication bit, the second indication bit being used to indicate that information carrying the DPID is any of the following: unicast information or multicast information.

38. A data transmission apparatus, comprising:
a second determining module, configured to determine a data plane identity DPID corresponding to a terminal, the DPID being used to identify the terminal on a data plane; and
a fourth sending module, configured to send the DPID to the terminal.

39. The data transmission apparatus according to claim 38, wherein the second determining module is specifically configured to:
determine identity-related information of the terminal; and
determine the DPID based on the identity-related information of the terminal; wherein
the identity-related information of the terminal comprises one or more of the following:
a temporary identifier C-RNTI of the terminal;
a serving cell index ServCellIndex of the terminal;
a 5G temporary mobile subscriber identity 5G-TMSI of the terminal;
a 5G shorted temporary mobile subscriber identity 5G-S-TMSI of the terminal; or
a MAC address managed locally by a network-side device.

40. The data transmission apparatus according to claim 39, wherein in a case that the network-side device comprises a core network function, the second determining module is specifically configured to:
receive one or more of the following sent by a first base station:
the serving cell index ServCellIndex of the terminal; or the temporary identifier C-RNTI of the terminal.

41. The data transmission apparatus according to claim 39, wherein in a case that the network-side device comprises a first base station, the second determining module is specifically configured to:
receive one or more of the following sent by a core network function:
the 5G temporary mobile subscriber identity 5G-TMSI of the terminal; or
the 5G shorted temporary mobile subscriber identity 5G-S-TMSI of the terminal.

42. The data transmission apparatus according to claim 39, wherein the second determining module is specifically configured to:
receive the identity-related information of the terminal sent by the terminal.

43. The data transmission apparatus according to any one of claims 38 to 42, wherein the apparatus further comprises:
a fifth sending module, configured to send second information to the data plane, the second information comprising any one or more of the following:
the DPID; or
a region for data collection in which the terminal is capable of performing the data collection.

44. The data transmission apparatus according to any one of claims 38 to 43, wherein the apparatus further comprises:
a sixth sending module, configured to send the DPID to a second base station; wherein
the second base station is a base station in a region for data collection in which the terminal performs the data collection.

45. A data transmission apparatus, comprising:
a third obtaining module, configured to obtain a data plane identity DPID corresponding to a terminal, the DPID being used to identify the terminal on a data plane.

46. A data transmission apparatus, comprising:
a fourth obtaining module, configured to obtain a data plane identity DPID corresponding to a terminal, the DPID being used to identify the terminal on a data plane;
a third establishing module, configured to establish a connection to the terminal based on the data plane identity DPID; and
a first receiving module, configured to receive data sent by the terminal.

47. A terminal, comprising a processor and a memory, wherein the memory has stored thereon a program or an instruction executable on the processor, and when the program or the instruction is executed by the processor, the data transmission method according to any one of claims 1 to 13 are implemented.

48. A network-side device, comprising a processor and a memory, wherein the memory has stored thereon a program or an instruction executable on the processor, and when the program or the instruction is executed by the processor, the data transmission method according to any one of claims 14 to 20 are implemented.

49. A second base station, comprising a processor and a memory, wherein the memory has stored thereon a program or an instruction executable on the processor, and when the program or the instruction is executed by the processor, the data transmission method according to claim 21 or 22 are implemented.

50. A data plane, comprising a processor and a memory, wherein the memory has stored thereon a program or an instruction executable on the processor, and when the program or the instruction is executed by the processor, the data transmission method according to claim 23 or 24 are implemented.

51. A readable storage medium, wherein the readable storage medium has stored thereon a program or an instruction, and when the program or the instruction is executed by a processor, the data transmission method according to any one of claims 1 to 24 is implemented.
